# FASCICULE DE BREVET EUROPEEN

(11) **EP 3 149 280 B1**
(45) Date de publication et mention de la délivrance du brevet: **14.05.2025**
(21) Numéro de dépôt: 15729543.7
(22) Date de dépôt: 27.05.2015
(51) Int. Cl.: F01D 5/18, B22C 9/10

(54) **AUBE DE TURBINE AVEC CONDUITS DE REFROIDISSEMENT OPTIMISÉS**
TURBINENSCHAUFEL MIT OPTIMIERTEN KÜHLKANÄLEN
TURBINE BLADE WITH OPTIMISED COOLING CONDUITS

(30) Priorité: 28.05.2014 FR 1454864
(43) Date de publication de la demande: 05.04.2017
(73) Titulaire: SAFRAN AIRCRAFT ENGINES, 75015 Paris (FR)
(72) Inventeur: DUJOL, Charlotte, Marie, F-77550 Moissy-Cramayel Cedex (FR); ENEAU, Patrice, F-77550 Moissy-Cramayel Cedex (FR); DIGARD BROU DE CUISSART, Sébastien, F-77550 Moissy-Cramayel Cedex (FR); VOLLEBREGT, Matthieu, Jean-Luc, F-77550 Moissy-Cramayel Cedex (FR)
(74) Mandataire: Brevalex
(86) Numéro de dépôt international: PCT/FR2015/051397
(87) Numéro de publication internationale: WO 2015/181497

(56) Documents cités:
- EP-A1- 1 126 134
- EP-A1- 1 600 604
- EP-A1- 1 882 819
- EP-A1- 2 189 230
- EP-A1- 2 639 405
- EP-A2- 1 065 343
- EP-A2- 1 655 452
- EP-A2- 1 895 098
- EP-A2- 2 119 873
- WO-A1-03/042503
- JP-A- S61 279 702
- US-A- 3 373 970
- US-A- 4 252 501
- US-A1- 2008 080 979
- US-A1- 2012 269 647

## Description

### DOMAINE TECHNIQUE

L'invention concerne une aube de turbine de moteur d'aéronef de type turbomachine, telle qu'un turboréacteur ou un turbopropulseur.

### ETAT DE LA TECHNIQUE ANTERIEURE

Dans un tel moteur, l'air extérieur est admis dans une manche d'entrée pour traverser une soufflante comportant une série de pales rotatives avant de se scinder en un flux primaire central et un flux secondaire entourant le flux primaire.

Le flux primaire est ensuite compressé avant d'arriver dans une chambre de combustion, après quoi il se détend en traversant un ensemble de turbines avant d'être évacué vers l'arrière en générant de la poussée. Le flux secondaire est quant à lui propulsé directement vers l'arrière par la soufflante pour générer une poussée complémentaire.

La détente dans les turbines, qui permet d'entraîner le compresseur et la soufflante, a lieu à température élevée du fait qu'elle se produit immédiatement après la combustion. Cette turbine est ainsi conçue et dimensionnée pour fonctionner dans des conditions sévères de température, de pression et de débit de fluide.

Chaque turbine comporte une succession d'étages comportant chacun une série d'aubes orientées radialement et régulièrement espacées autour d'un arbre de rotation du moteur. Cet arbre central porte les éléments rotatifs de la turbine ainsi que les éléments rotatifs du compresseur et de la soufflante.

Concrètement, les aubes de la turbine qui sont soumises aux conditions les plus sévères sont celles des premiers étages de détente de cette turbine, à savoir les étages les plus proches de la zone de combustion et qui sont communément appelés étages haute pression.

D'une manière générale, les besoins accrus en performances et l'évolution des réglementations conduisent à concevoir des moteurs de plus faible taille fonctionnant dans des environnements de plus en plus sévères. Ceci implique d'accroître la tenue et la performance des aubes de turbine haute pression en particulier en ce qui concerne leur tenue en température.

Néanmoins, les améliorations existantes en ce qui concerne les matériaux et les revêtements de ces aubes ne suffisent pas pour leur permettre de supporter les températures élevées pouvant être atteintes par le flux en aval de la chambre de combustion. Cette situation conduit à reconsidérer le refroidissement de ces aubes pour l'améliorer afin qu'elles puissent supporter ces nouvelles conditions de fonctionnement.

Ce refroidissement est assuré en faisant circuler à l'intérieur de ces aubes de l'air frais qui est prélevé dans le turboréacteur en amont de la combustion. Cet air est admis en pied d'aube, pour cheminer le long d'un circuit interne de l'aube afin de la refroidir, et il est évacué hors de l'aube par des perçages traversant la paroi de cette aube et répartis sur cette paroi. Ces perçages servent à évacuer l'air de refroidissement, mais ils créent aussi à la surface externe de l'aube un film d'air plus froid que l'air issu de la combustion, ce qui contribue aussi à limiter la température de l'aube.

Pour accroître l'efficacité de refroidissement, les régions intérieures de l'aube dans lesquelles circule l'air de refroidissement comportent des artifices, c'est-à-dire des reliefs internes qui perturbent l'écoulement fluide de l'air de refroidissement pour accroître le transfert thermique depuis la paroi de l'aube vers cet air de refroidissement circulant dans les conduits internes de l'aube.

Ces architectures de refroidissement traditionnelles sont pénalisées par le fait que la longueur du circuit interne de l'aube donne lieu à un air trop fortement réchauffé lorsqu'il atteint la fin de ce circuit, de sorte que son efficacité de refroidissement est limitée dans les régions de fin de parcours, et en particulier au niveau du sommet d'aube où l'on cherche au contraire à obtenir une efficacité de refroidissement accrue.

En pratique dans les aubes connues, notamment des documents EP2119873A2, EP1065343A2, WO03042503A1, EP1895098B1, US2008080979A1 et EP1882819B1, l'efficacité de refroidissement s'avère inadéquate.

Le but de l'invention est de proposer une structure d'aube permettant d'améliorer l'efficacité de refroidissement de cette aube.

### RESUME DE L'INVENTION

A cet effet, l'invention a pour objet une aube de turbine de turbomachine et des moyens de moulage pour fabriquer une telle aube, comme défini dans les revendications.

### BREVE DESCRIPTION DES DESSINS

La figure 1 est une vue schématique d'un turboréacteur à double flux en coupe longitudinale ;
La figure 2 est une vue en perspective d'une aube de turbine de turboréacteur montré sur la figure 1 ;
La figure 3 est une vue en perspective représentant les parties internes creuses d'une aube de turbine selon un premier mode de réalisation de l'invention non couvert par les revendications ;
La figure 4 est une vue en perspective représentant les parties internes creuses d'une aube de turbine selon un deuxième mode de réalisation de l'invention ;
La figure 5 est une vue en perspective représentant les parties internes creuses d'une aube de turbine selon un troisième mode de réalisation de l'invention ;
La figure 6 est une vue en perspective représentant les parties internes creuses d'une aube de turbine selon un quatrième mode de réalisation de l'invention ;
La figure 7 est une vue en perspective représentant les parties internes creuses d'une aube de turbine selon un cinquième mode de réalisation de l'invention ;
La figure 8 est une vue en perspective représentant les parties internes creuses d'une aube de turbine selon un sixième mode de réalisation de l'invention non couvert par les revendications ;

### EXPOSE DETAILLE DE MODES DE REALISATION PARTICULIERS

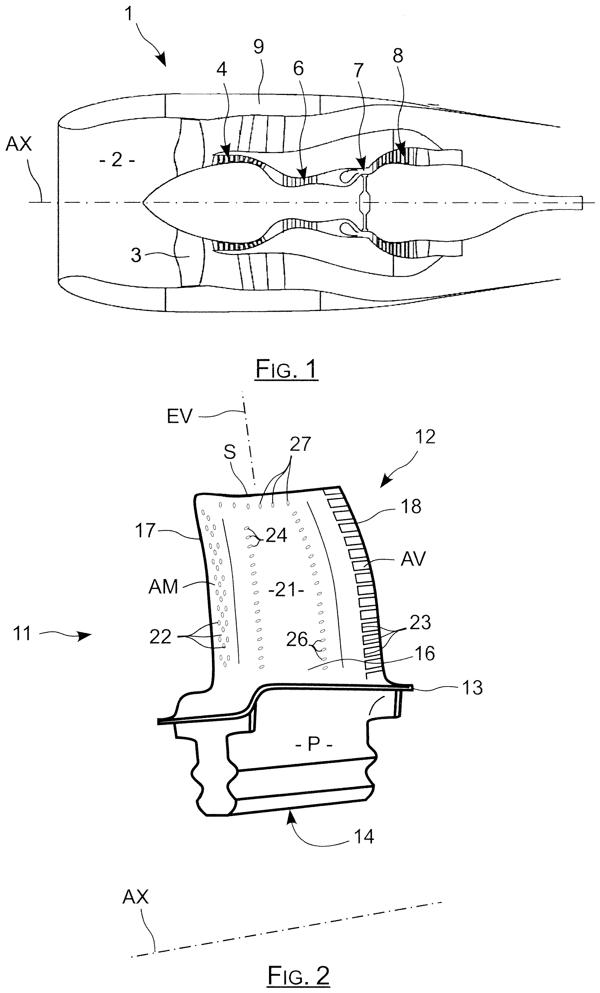

Comme visible sur la figure 1, une partie avant d'un turboréacteur à double flux 1 comporte une manche d'entrée 2 dans laquelle est admis l'air avant d'être aspiré par les pales d'une soufflante 3. Après avoir passé la région de la soufflante, l'air se divise en un flux primaire central et un flux secondaire qui entoure le flux primaire.

Le flux d'air primaire traverse ensuite un premier compresseur 4 situé immédiatement après la soufflante 3 alors que le flux secondaire est propulsé vers l'arrière pour directement générer une poussée additionnelle en étant soufflé autour du flux primaire.

Le flux primaire traverse ensuite un second étage de compression 6, avant d'atteindre une chambre 7 où a lieu sa combustion, après injection et vaporisation d'un carburant. Après combustion, ce flux primaire se détend dans une turbine haute pression 8 puis dans une turbine basse pression non représentée pour entrainer en rotation les étages de compression et la soufflante, avant d'être expulsé vers l'arrière du moteur pour générer une poussée.

Le moteur 1 et ses composants ont une forme de révolution autour d'un axe longitudinal AX. Il comporte notamment un carter externe 9 ayant lui aussi une forme de révolution et s'étendant depuis l'avant du moteur où il délimite la manche d'entrée d'air, jusqu'à la partie arrière où il délimite le conduit par lequel les flux primaire et secondaire sont évacués, l'avant et l'arrière à considérer par rapport à la direction d'avancement de l'aéronef équipé de ce turboréacteur. Ce carter 9 supporte les composants rotatifs situés au centre du moteur et qui comprennent un arbre rotatif portant les pales de la soufflante ainsi que les étages de compression et la turbine avec leurs aubes.

Une telle aube, qui est repérée par 11 sur la figure 2, comprend un pied P par lequel elle est fixée à un corps rotatif non représenté, appelé disque de turbine, et une pale 12 portée par ce pied P et constituant la partie aérodynamique de cette aube. Comme visible sur la figure 2, l'aube 11 comporte entre le pied P et la pale 12 une région intermédiaire 13 appelée plateforme.

L'ensemble que forme le pied P et la pale 12 est une pièce unique monobloc creuse issue de fonderie et comportant des conduits internes par lesquels circule de l'air de refroidissement. Ces conduits internes non visibles dans la figure 2 comportent des bouches d'admission s'ouvrant en face inférieure 14 du pied P et par lesquelles ces conduits sont alimentés en air frais. La paroi creuse de la pale 12 comporte des trous traversants et des fentes par lesquels est évacué l'air de refroidissement.

La pale 12 a une forme gauche vrillée ayant un contour sensiblement rectangulaire, se rapprochant d'un parallélépipède. Elle comprend une base 16 par laquelle elle est raccordée au pied P et qui s'étend à peu près parallèlement à l'axe de rotation AX. Elle comprend aussi un bord d'attaque 17 orienté radialement par rapport à l'axe AX et situé au niveau de l'amont AM de l'aube, c'est-à-dire la région avant de cette aube, par rapport à la direction d'avancement du moteur qu'elle équipe en service. Cette aube comporte aussi, un bord de fuite 18 orienté à peu près parallèlement au bord d'attaque 17 en étant espacé de celui-ci le long de l'axe AX pour être situé au niveau de la région aval AV ou arrière de l'aube. Elle comprend encore un sommet S à peu près parallèle à la base 16 et espacé de celle-ci selon une direction radiale par rapport à l'axe AX.

Les deux parois principales de cette aube sont sa paroi d'intrados 21, qui est la paroi visible dans la figure 2, et sa paroi d'extrados qui est la paroi opposée espacée de la paroi d'intrados, et qui n'est pas visible dans la figure 2 du fait qu'elle est masquée par la paroi d'intrados 21. Les parois d'intrados et d'extrados sont réunies au niveau du bord d'attaque 17, au niveau du bord de fuite 18 et également dans la région du sommet S de cette aube. Ces parois sont espacées l'une de l'autre au niveau de la base 16 pour permettre l'admission d'air de refroidissement dans la région interne de la pale.

Le bord d'attaque 17 a une forme bombée et il est pourvu d'une série de trous de refroidissements 22 traversant la paroi de l'aube dans cette région. Le bord de fuite 18 a quant à lui une forme effilée, et il comporte une série de fentes de refroidissement 23. Ces fentes 23 sont des fentes de faibles longueurs s'étendant le long de la direction d'envergure et qui sont espacées les unes des autres en étant situées dans le prolongement les unes des autres à faible distance du bord de fuite.

Chaque fente 23 traverse la paroi de l'aube pour prélever de l'air de refroidissement à l'intérieur de cette aube et le souffler sur la paroi d'intrados au niveau du bord de fuite. Complémentairement, le bord de fuite est pourvu de nervures externes orientées parallèlement à l'axe AX pour canaliser l'air de refroidissement issu de ces fentes.

En fonctionnement, le fluide dans lequel est située cette aube 11 se déplace par rapport à celle-ci depuis le bord d'attaque 17 vers le bord de fuite 18 en longeant l'intrados 21 et l'extrados. La paroi d'intrados qui est soumise à un échauffement significatif en fonctionnement, comporte une séries de trous 24 sensiblement parallèlement au bord d'attaque 17 en étant situés en aval de ce bord d'attaque, et une autre série de trous 26 sensiblement parallèlement au bord de fuite 18 en étant situés en amont de ce bord de fuite 18 et des fentes 23 qu'il comporte . Les séries de trous 24 et 26 s'étendent ainsi l'une et l'autre selon la direction d'envergure EV de la pale, qui est la direction radiale par rapport à l'axe AX.

La région du sommet S de l'aube 11 présente, contrairement au bord d'attaque 17 et au bord de fuite 18, une certaine épaisseur, et il a par ailleurs une forme délimitant une portion creuse dite en baignoire.

Plus concrètement, ce sommet S présente une paroi de fermeture qui raccorde les parois d'intrados et d'extrados, cette paroi de fermeture ayant une orientation qui est globalement perpendiculaire aux parois d'intrados et d'extrados et parallèle à l'axe AX, ce qui correspond à une orientation perpendiculaire à la direction d'envergure EV. Cette paroi de fermeture qui n'est pas visible sur la figure 2 est située en retrait vers l'axe AX par rapport au bord libre de la paroi d'intrados et au bord libre de la paroi d'extrados, de sorte qu'elle constitue, conjointement avec ces bords une portion creuse ouverte en direction opposée à l'axe AX.

Une série de trous supplémentaires 27 traversant la paroi d'intrados est prévue le long du sommet S pour assurer un refroidissement significatif de ce sommet de pale qui subit des contraintes importantes du fait qu'il constitue la partie ayant la vitesse la plus élevée par rapport au fluide.

La série de trous 27 s'étend parallèlement à la paroi de fermeture, et la pale comporte, complémentairement, des trous non visibles sur la figure 2 qui traversent la paroi de fermeture pour déboucher dans la portion creuse appelée baignoire qui est au sommet de la pale.

Comme indiqué plus haut, une telle aube est une pièce monobloc creuse. Elle est fabriquée par moulage d'un matériau métallique, en utilisant un ensemble de noyaux pour délimiter les conduits internes de sa portion creuse ainsi que des portions de tiges pour former ses trous traversants. Les noyaux, tiges et autres sont retirés une fois que l'opération de moulage est terminée, typiquement avec un processus d'attaque chimique à même de dissoudre ces éléments sans altérer le matériau moulé.

Les figures qui suivent montrent des régions internes de l'aube selon l'invention qui y sont représentées par les formes des noyaux permettant de fabriquer cette aube. Autrement dit, les formes qui sont en relief sur les figures qui suivent constituent des représentations des formes creuses de l'aube selon l'invention.

L'idée à la base de l'invention est d'améliorer le refroidissement de l'aube dans la région de la paroi d'intrados qui est au voisinage du bord de fuite et du sommet de l'aube, attendu qu'en pratique cette région est la première à se détériorer au cours de la vie d'une aube.

Ceci est obtenu en prévoyant dans la région du sommet de l'aube une cavité supérieure s'étendant de l'avant à l'arrière de l'aube et qui est alimentée directement en air provenant du pied de l'aube par un conduit d'alimentation de cette cavité supérieure.

L'air prélevé dans le pied chemine ainsi sans détour, de manière sensiblement rectiligne, jusqu'à la cavité supérieure. La longueur du parcours de cet air, dans le conduit d'alimentation, pour qu'il atteigne la cavité supérieure est ainsi inférieure ou égale à la longueur de la pale selon la direction d'envergure EV. Autrement dit, en réalisant une alimentation directe, ce conduit permet de minimiser l'échauffement de l'air apporté à la cavité supérieure.

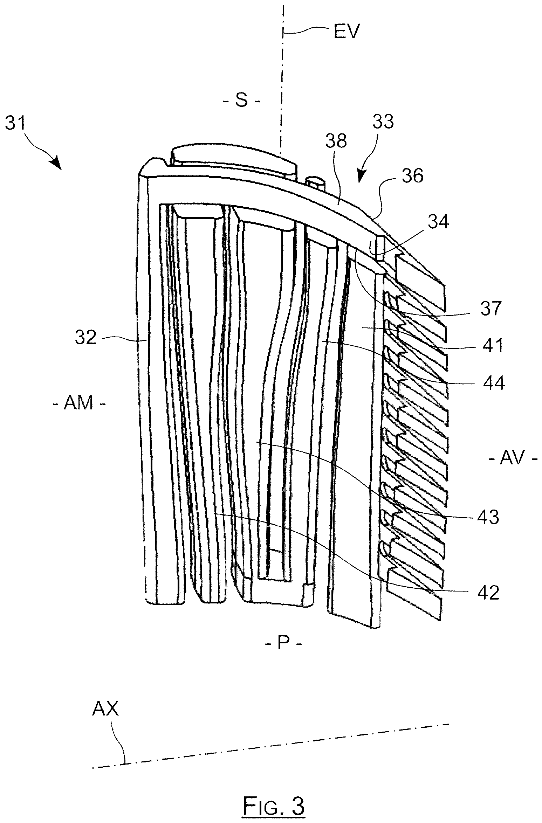

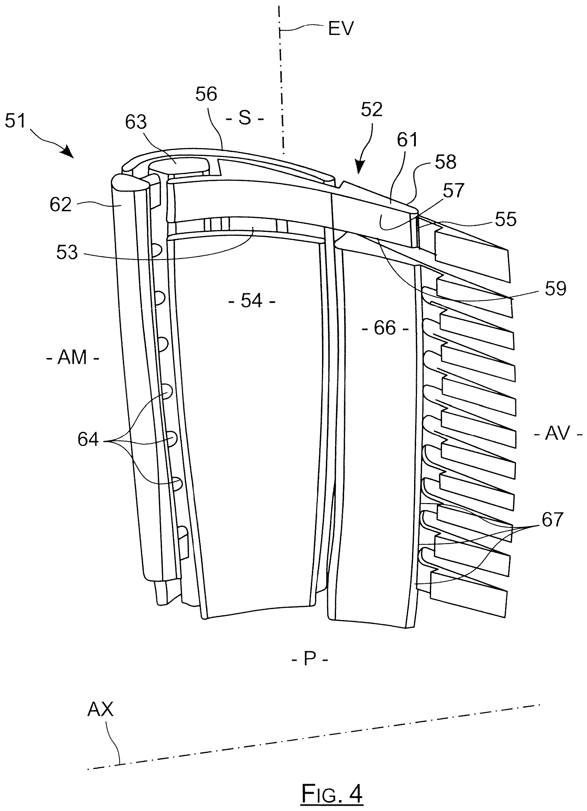

Dans le premier mode de réalisation, non couvert par les revendications, correspondant à la figure 3, ce conduit d'alimentation est formé par une rampe de refroidissement du bord d'attaque située en amont. Dans les autres modes de réalisation, correspondant aux figures 4 à 8, ce conduit d'alimentation est constitué par un conduit central de l'aube, c'est-à-dire situé sensiblement à mi-distance entre son bord d'attaque et son bord de fuite.

Dans le premier mode de réalisation de l'invention, l'aube, qui est repérée par 31 dans la figure 3 où elle est représentée, comprend ainsi des conduits internes agencés pour apporter dans la région du sommet de l'aube du côté intrados, de l'air de refroidissement le plus frais possible de manière à y accroître l'efficacité du refroidissement.

L'intérieur de cette aube 31 comporte ainsi dans sa région amont, repérée par AM, une rampe amont 32 orientée selon sa direction d'envergure EV et qui longe son bord d'attaque. Cette rampe amont 32 alimente directement une cavité supérieure 33 de l'aube, tout en approvisionnant en air frais des trous de refroidissement traversant la portion de paroi formant le bord d'attaque de l'aube. Cette rampe amont 32 s'étend depuis le pied de l'aube, repéré par P, et par lequel elle est alimentée en air de façon directe, jusqu'au sommet de l'aube repéré par S.

La cavité supérieure 33 qui est située à proximité du sommet s'étend le long de la paroi de fermeture de cette aube 31 et le long de sa paroi d'intrados, depuis l'avant jusqu'à l'arrière de l'aube qui est repéré par AV. Ces deux parois ne sont pas visibles dans la figure 3 puisqu'il s'agit d'une représentation des régions creuses de cette aube.

Toute la partie du sommet S de l'aube 31 qui est située du côté de son intrados, sur sensiblement toute sa longueur et en particulier jusqu'à l'extrémité aval de ce sommet S est ainsi approvisionné en air par la cavité supérieure 33 qui est elle-même alimentée par la rampe amont 32 formant conduit.

La cavité supérieure 33 atteint le bord de fuite de l'aube, en région aval AV, pour alimenter en air frais au moins une fente de refroidissement de ce bord de fuite, à savoir la fente la plus proche du sommet qui correspond à l'une des régions les plus sévèrement sollicitées de l'aube.

Cette cavité supérieure 33 longe la paroi d'intrados en s'étendant sur une largeur inférieure à la largeur ou épaisseur de la pale, c'est-à-dire qu'elle a une largeur inférieure à la distance séparant les parois d'intrados et d'extrados. Elle est délimitée latéralement par une première face 34 qui longe l'intrados et une seconde face 36 espacée de la première. La première face 34 et la deuxième face 36 sont réunies à l'avant et à l'arrière de cette cavité supérieure.

La cavité supérieure 33 est délimitée verticalement par un fond 37 parallèle à la paroi de fermeture et espacé de celle-ci et, par une face supérieure 38 qui est la face inférieure de la paroi de fermeture.

Dans la région du sommet S de la pale, la paroi d'intrados peut comporter des trous traversants, non représentés, permettant à la cavité supérieure 33 de refroidir en outre la face externe de la paroi d'intrados dans cette région.

L'intérieur de l'aube 31 comporte encore une rampe aval 41 s'étendant le long du bord de fuite depuis le pied P jusqu'à la région du sommet S pour se terminer sous la partie arrière de la cavité supérieure 33. Cette rampe aval 41 alimente une série de fentes de refroidissement du bord de fuite, non visibles dans la figure 3.

La majorité des fentes de refroidissement du bord de fuite sont ainsi alimentées en air par la rampe aval 41, mais c'est la cavité supérieure qui alimente la ou les fentes les plus proches du sommet S, qui est une région soumise à des contraintes thermiques plus importantes. Les fentes proches du sommet sont ainsi alimentées avec un air plus frais et/ou ayant un débit plus important que les autres.

L'aube de la figure 3 comporte encore un premier conduit central 42, un second conduit central 43 et un conduit aval 44, orientés selon la direction d'envergure, et communiquant les uns avec les autres selon un agencement dit en trombone. Le premier conduit central 42 qui longe la rampe amont 32 collecte de l'air au niveau du pied de l'aube, et il communique au niveau du sommet S avec le second conduit central 43 pour l'alimenter en air.

Ce second conduit central 43 est relié au niveau de la base de l'aube avec le conduit aval 44 pour l'alimenter en air. Ce conduit aval 44 s'étend de manière rectiligne depuis le pied P jusqu'au sommet S, parallèlement à la rampe aval 41 qu'il longe en étant situé en amont de cette rampe aval 41.

Comme visible dans la figure, l'extrémité du conduit aval 44 aboutit dans la région du sommet S en longeant la seconde face 36 de la cavité supérieure 33 pour la contourner. La paroi d'intrados peut être pourvue de trous traversants permettant aux conduit 42, 43, 44 de fournir de l'air de refroidissement en face externe de cette paroi pour la refroidir en y formant un film externe.

La paroi d'intrados peut comporter au niveau du conduit aval 44 des trous traversants par lesquels ce conduit aval 44 fournit de l'air refroidissant la face externe de la paroi d'intrados en amont du bord de fuite de la pale.

Complémentairement ou alternativement à ces trous de refroidissement de la paroi d'intrados en amont du bord de fuite, le conduit aval 44 peut alimenter la rampe aval 41 par une série de passages calibrés non représentés, régulièrement espaces les uns des autres le long de la direction d'envergure EV. Dans ce cas, au lieu d'être alimenté par le second conduit 43, le conduit aval 44 collecte alors directement de l'air de refroidissement au niveau du pied de l'aube, pour que l'air qu'il fournit à la rampe aval soit le plus frais possible.

Ainsi, selon le choix de conception, la rampe aval 41 peut être alimentée de manière calibrée par le conduit aval 44, ou bien, elle peut au contraire être alimentée de manière directe dans la région du pied de l'aube.

Ces passages sont alors calibrés pour obtenir approximativement un débit d'air souhaité dans chaque fente de refroidissement du bord de fuite. Le débit d'air souhaité pour une fente donnée est conditionné par les contraintes thermiques du bord de fuite dans la région refroidie par cette fente.

Dans un deuxième mode de réalisation de l'invention représenté à la figure 4, l'aube qui est repérée par 51 comprend une cavité supérieure 52 qui est alimentée directement par un conduit central 53 entièrement dédié à cette cavité supérieure 52. Ainsi, contrairement au premier mode de réalisation de la figure 3, le conduit d'alimentation de la cavité supérieure ne participe pas au refroidissement du bord d'attaque.

Dans cette aube 51 de la figure 4, on a de plus prévu une première cavité latérale 54 longeant la paroi d'intrados, et une seconde cavité latérale 56 longeant l'extrados. Ces deux cavités latérales isolent thermiquement le conduit central ainsi qu'un conduit amont d'alimentation calibrée d'une rampe de refroidissement du bord d'attaque de l'aube, des parois d'intrados et d'extrados qui sont réchauffée par les écoulements de gaz entourant la pale.

La cavité supérieure 52 de cette aube 51 a une forme sensiblement identique à celle de l'aube 31 de la figure 3. Elle est située à proximité du sommet S, s'étend le long des parois de fermeture et d'intrados, de l'avant jusqu'à l'arrière de la pale. Là aussi, toute la partie du sommet S située du côté intrados est approvisionnée en air par cette cavité supérieure 52, sur sensiblement toute sa longueur jusqu'à l'extrémité arrière. Cette cavité supérieure 52 s'étend aussi jusqu'au bord de fuite, pour alimenter en air frais au moins la fente la plus proche du sommet S, repérée par 55, et éventuellement quelques fentes adjacentes.

L'épaisseur de cette cavité supérieure 52 est là aussi inférieure à l'épaisseur de la pale. Elle est délimitée latéralement par une première face 57 qui longe l'intrados et une seconde face 58 espacée de la première face, ces faces étant réunies à l'avant et à l'arrière. Selon la direction verticale, la cavité supérieure 52 est délimitée par un fond 59 parallèle à la paroi de fermeture, et par la face inférieure 61 de cette paroi de fermeture.

Dans la région du sommet S de la pale, la paroi d'intrados peut aussi comporter des trous traversants pour refroidir la face externe de la paroi d'intrados dans la région du sommet.

Le conduit central 53 alimente cette cavité supérieure 52 en s'étendant depuis le pied P de l'aube par lequel il est alimenté en air, jusqu'au sommet de cette aube, où il débouche entièrement dans le fond 59 de cette cavité supérieure 52.

Le bord d'attaque de l'aube 51 est refroidi par une rampe amont 62 qui s'étend depuis la base de la pale jusqu'au sommet S, mais qui est alimenté non pas par le pied de manière directe, mais par un conduit amont 63 de manière calibrée. Cette alimentation calibrée est assurée par des passages calibrés 64 régulièrement espacés le long de la direction d'envergure EV de l'aube et qui relient chacun le conduit amont 63 à la rampe amont 62. Chaque passage 64 a un diamètre calibré, c'est-à-dire choisi à la conception pour obtenir dans la zone de la rampe 62 qu'il alimente un débit d'air souhaité qui est conditionné par la thermique de l'aube dans cette région.

La paroi de l'aube comporte dans la région du bord d'attaque des trous non représentés, par lesquels l'air circulant dans la rampe traverse la paroi pour refroidir la face externe du bord d'attaque.

Comme visible dans la figure 4, la première cavité latérale 54 présente une faible épaisseur, et elle s'étend depuis le pied P jusqu'à la région du sommet S en ayant un contour généralement rectangulaire. Cette première cavité latérale 54 se termine sous la cavité supérieure 52 de manière à ne pas la couvrir. Elle présente une largeur suffisante pour masquer ou couvrir le conduit central 53 ainsi que le conduit amont 63 qui longe ce conduit central.

De manière analogue, la deuxième cavité latérale 56 a aussi une faible épaisseur, et elle s'étend depuis le pied P jusqu'à la région du sommet S mais en recouvrant la cavité supérieure 52. Cette deuxième cavité latérale présente un contour généralement rectangulaire, ayant une largeur suffisante pour masquer ou couvrir le conduit central ainsi que le conduit amont 63 et la cavité supérieure 52 du côté de l'extrados.

Grâce à ces deux cavités latérales, l'air qui est fourni à la cavité supérieure 52 par le conduit central 53 est maintenu frais durant son cheminement dans ce conduit, grâce aux écrans thermiques que forment les cavités latérales 54 et 56. De même, l'air qui est fourni par le conduit amont 63 est lui aussi maintenu frais durant son cheminement dans ce conduit amont.

Comme indiqué plus haut, la ou les fentes de refroidissement du bord de fuite situées dans la région du sommet S sont approvisionnées en air par la cavité supérieure 52. Les autres fentes du bord de fuite, repérées par 67, sont quant à elles alimentées par une rampe aval 66 qui s'étend depuis le pied P, où elle est alimentée directement via ce pied, jusqu'à la région du sommet S pour se terminer sous la partie arrière de la cavité supérieure 52.

Les fentes 67 sont ainsi alimentées en air par la rampe aval 66, mais c'est la cavité supérieure 52 qui alimente la ou les fentes les plus proches du sommet S avec un air plus frais et/ou ayant un débit plus important.

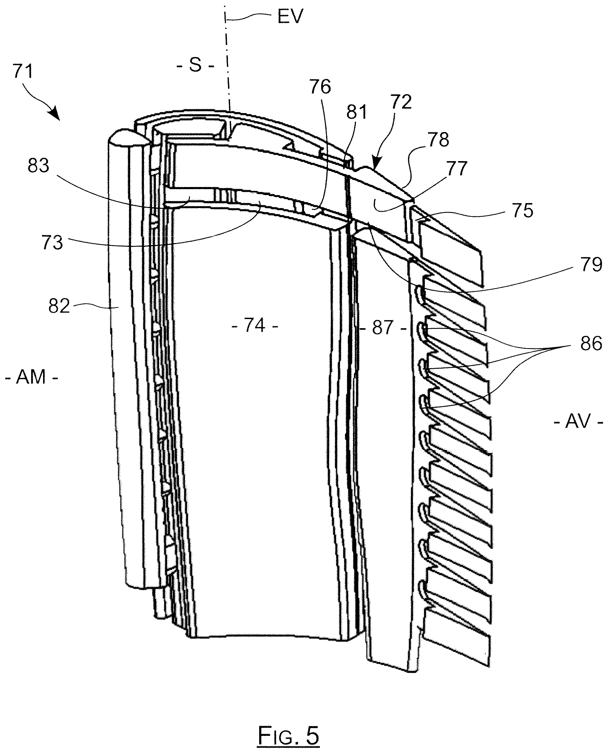

Dans le troisième mode de réalisation de l'invention qui est représenté à la figure 5, l'aube qui est repérée par 71 comporte aussi une cavité supérieure 72 alimentée par un conduit central 73 dédié qui est isolé thermiquement par deux cavités latérales 74 et 76. Ces deux cavités latérales isolent aussi un conduit amont d'alimentation calibrée d'une rampe de refroidissement du bord d'attaque de l'aube. Mais dans ce troisième mode de réalisation, les deux cavités latérales 74 et 76 sont réunies en partie arrière ou aval de l'aube pour envelopper ce conduit central 73 sur trois quarts de sa circonférence, de manière à offrir une meilleure isolation thermique pour ce conduit 73.

La cavité supérieure 72 a une forme sensiblement identique à celle des aubes des figures 3 et 4. Elle est située à proximité du sommet S, s'étend le long des parois de fermeture et d'intrados, de l'avant jusqu'à l'arrière de la pale. Toute la partie du sommet S située du côté intrados est approvisionnée par cette cavité supérieure 72, sur toute sa longueur jusqu'à l'extrémité arrière. Cette cavité supérieure 72 s'étend aussi jusqu'au bord de fuite, pour alimenter au moins la fente la plus proche du sommet S, repérée par 75, et éventuellement quelques fentes adjacentes.

L'épaisseur de cette cavité supérieure 72 est là aussi inférieure à l'épaisseur de la pale. Elle est délimitée latéralement par une première face 77 qui longe l'intrados et une seconde face 78 espacée de la première, ces faces étant réunies à l'avant et à l'arrière. Selon la direction verticale, la cavité supérieure 72 est délimitée par un fond 79 parallèle à la paroi de fermeture, et par la face inférieure 81 de cette paroi de fermeture. Dans la région du sommet S de la pale, la paroi d'intrados peut aussi comporter des trous traversants pour refroidir la face externe de la paroi d'intrados dans la région du sommet.

Le conduit central 73 alimente cette cavité supérieure 72 en s'étendant depuis le pied de l'aube par lequel il est alimenté en air, jusqu'au sommet S, où il débouche entièrement dans le fond 79 de la cavité supérieure.

Le bord d'attaque de l'aube 71 est refroidi par une rampe amont 82 qui s'étend depuis la base de la pale jusqu'au sommet S, et qui est alimentée par un conduit amont 83 de manière calibrée au moyen de passages calibrés régulièrement espacés le long de la direction d'envergure EV de l'aube et qui relient chacun le conduit amont à la rampe amont. La paroi de l'aube comporte dans la région du bord d'attaque des trous non représentés, par lesquels l'air de la rampe traverse la paroi pour refroidir la face externe du bord d'attaque.

La première cavité latérale 74 a une faible épaisseur et s'étend depuis le pied jusqu'à la région du sommet S en ayant un contour généralement rectangulaire. Elle se termine sous la cavité supérieure 72 sans la couvrir. Elle présente une largeur suffisante pour masquer ou couvrir le conduit central 73 ainsi que le conduit amont 83 qui longe ce conduit central.

La deuxième cavité latérale 76 a aussi une faible épaisseur, et elle s'étend depuis le pied jusqu'à la région du sommet S mais en recouvrant la cavité supérieure 72. Elle présente un contour généralement rectangulaire, ayant une largeur suffisante pour masquer ou couvrir le conduit central 73 et le conduit amont 83 et la cavité supérieure 72 du côté de l'extrados.

Contrairement au deuxième mode de réalisation, les deux cavités latérales 74 et 76 sont ici réunies en partie arrière ou aval au lieu d'être distinctes. De cette manière, ces deux cavités latérales entourent le conduit central 73 sur les trois quarts de sa circonférence de manière à améliorer encore son isolation thermique de l'environnement extérieur, pour qu'il puisse fournir à la cavité supérieure 72 qu'il alimente un air encore plus frais.

Comme visible dans la figure 5, ces deux cavités sont réunies par une zone de jonction située en aval par rapport au conduit central, et qui s'étend sur la majorité de la hauteur de ce conduit central. Ces deux cavités avec leur zone de jonction constituent ainsi une cavité unique enveloppant le conduit central sur la majorité de sa surface externe. En pratique, et comme visible sur la figure 5, la hauteur ou longueur de la zone de jonction le long de la direction d'envergure EV correspond à la hauteur ou longueur de la première cavité latérale le long de la direction d'envergure EV.

L'alimentation de ces deux cavités latérales peut être réalisée de manière séparée par deux conduits d'alimentation prélevant l'air séparément dans le pied d'aube, les cavités latérales étant alors réunies uniquement dans la région de la pale. Il peut être également envisageable de prévoir un unique canal d'alimentation des deux cavités latérales ayant en section une forme correspondant à celle de la lettre U.

La ou les fentes de refroidissement du bord de fuite situées dans la région du sommet S sont approvisionnées en air par la cavité supérieure 72. Les autres fentes du bord de fuite, repérées par 86, sont quant à elles alimentées par une rampe aval 87 qui s'étend depuis le pied, où elle est alimentée directement via ce pied, jusqu'à la région du sommet S pour se terminer sous la partie arrière de la cavité supérieure 72.

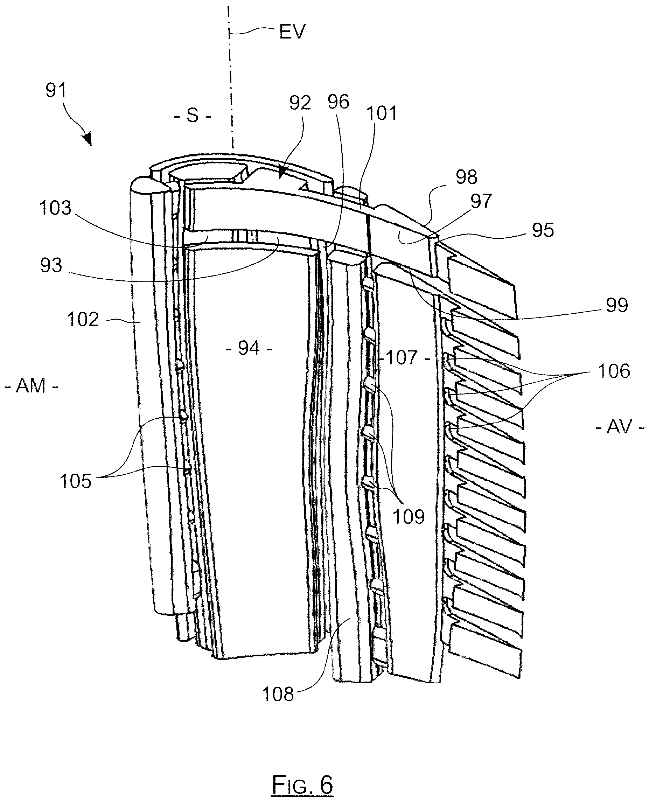

Dans un quatrième mode de réalisation de l'invention représenté à la figure 6, l'aube qui est repérée par 91 comporte aussi une cavité supérieure 92 alimentée par un conduit central 93 isolé par deux cavités latérales 94 et 96. Mais dans ce quatrième mode de réalisation, le bord de fuite est refroidi par une rampe aval qui est alimentée de manière calibrée par un conduit aval.

La cavité supérieure 92 a une forme sensiblement identique à celle des aubes des figures 3 à 5. Elle est située à proximité du sommet S, s'étend le long des parois de fermeture et d'intrados, de l'avant jusqu'à l'arrière de la pale. Toute la partie du sommet S située du côté intrados est approvisionnée en air de refroidissement par cette cavité supérieure 92, sur toute sa longueur jusqu'à l'extrémité arrière. Cette cavité supérieure 92 s'étend aussi jusqu'au bord de fuite, pour alimenter au moins la fente la plus proche du sommet S, repérée par 95, et éventuellement quelques fentes adjacentes.

Cette cavité supérieure 92 est délimitée latéralement par une première face 97 qui longe l'intrados et une seconde face 98 espacée de la première, ces faces étant réunies à l'avant et à l'arrière. Elle est délimitée verticalement par un fond 99 parallèle à la paroi de fermeture, et par la face inférieure 101 de cette paroi de fermeture. Dans la région du sommet S, la paroi d'intrados peut aussi comporter des trous traversants pour refroidir la face externe de la paroi d'intrados dans la région du sommet. Le conduit central 93 alimente cette cavité supérieure 92 en s'étendant depuis le pied de l'aube par lequel il est alimenté en air, jusqu'au sommet S, où il débouche entièrement dans le fond 99.

Le bord d'attaque de l'aube 91 est refroidi par une rampe amont 102 qui s'étend depuis la base de la pale jusqu'au sommet S, en étant alimenté par un conduit amont 103 de manière calibrée au moyen de passages calibrés 105 régulièrement espacés le long de la direction d'envergure EV de l'aube et qui relient chacun le conduit amont 103 à la rampe amont 102. La paroi de l'aube comporte dans la région du bord d'attaque des trous traversants grâce auxquels l'air de la rampe refroidit la face externe du bord d'attaque.

La première cavité latérale 94 a une faible épaisseur et s'étend depuis le pied jusqu'à la région du sommet S en ayant un contour généralement rectangulaire. Elle se termine sous la cavité supérieure 92 sans la couvrir. Elle présente une largeur suffisante pour masquer ou couvrir le conduit central 93 ainsi que le conduit amont 103 qui longe ce conduit central 93.

La deuxième cavité latérale 96 a aussi une faible épaisseur, et elle s'étend depuis le pied jusqu'à la région du sommet S mais en recouvrant la cavité supérieure 92. Elle présente un contour généralement rectangulaire, de largeur suffisante pour masquer ou couvrir le conduit central 93 et le conduit amont 103 et la cavité supérieure 92 du côté de l'extrados.

La ou les fentes de refroidissement du bord de fuite situées dans la région du sommet S sont approvisionnées en air par la cavité supérieure 92. Les autres fentes du bord de fuite, repérées par 106, sont quant à elles alimentées par une rampe aval 107 qui s'étend depuis le pied, jusqu'à la région du sommet S.

Cette rampe aval 107 est ici alimentée de manière calibrée par un conduit aval 108 qui s'étend depuis le pied de l'aube jusqu'à la région de son sommet S où il contourne une partie arrière de la cavité supérieure 92. Ce conduit aval 108 est situé entre le conduit central 93 et la rampe aval 107, et il n'est masqué ni par la cavité latérale 94 ni par la cavité latérale 96. Le conduit aval 108 alimente de manière calibrée la rampe aval 107, au moyen d'une série de passages calibrés 109 régulièrement espacés les uns des autres le long de la direction d'envergure EV et joignant chacun le conduit aval à la rampe 107.

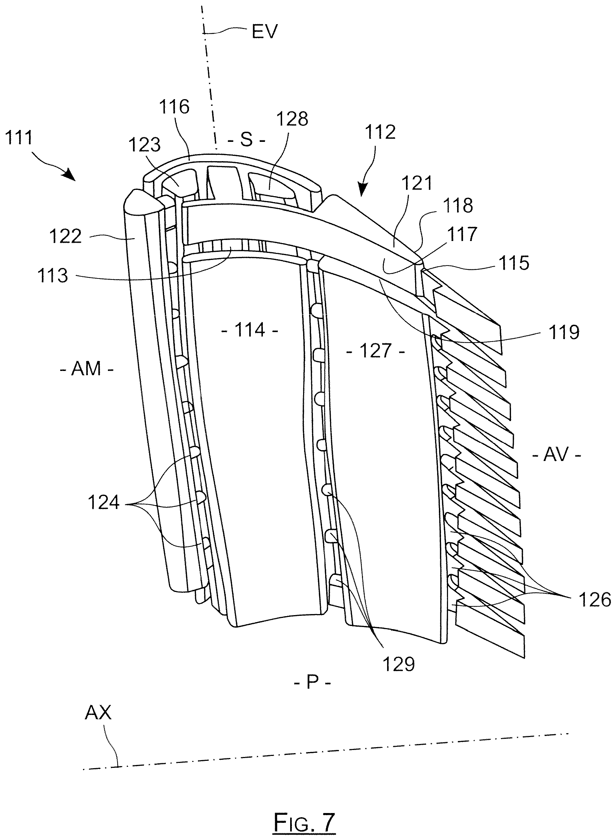

Dans un cinquième mode de réalisation de l'invention représenté à la figure 7, l'aube qui est repérée par 111 comporte aussi une cavité supérieure 112 alimentée par un conduit central 113 isolé par deux cavités latérales 114 et 116. Le bord de fuite est là aussi refroidi par une rampe aval alimentée de manière calibrée par un conduit aval, mais ce conduit aval est protégé thermiquement par des cavités latérales de l'aube de manière à fournir un air plus frais pour le refroidissement du bord de fuite.

La cavité supérieure 112 a une forme sensiblement identique à celle des aubes des figures 3 à 6. Elle est située à proximité du sommet S, s'étend le long des parois de fermeture et d'intrados, de l'avant jusqu'à l'arrière de la pale. Toute la partie du sommet S située du côté intrados est approvisionnée en air de refroidissement par cette cavité supérieure 112, sur toute sa longueur jusqu'à l'extrémité arrière. Cette cavité supérieure 112 s'étend aussi jusqu'au bord de fuite, pour alimenter au moins la fente la plus proche du sommet S, repérée par 115, et éventuellement quelques fentes adjacentes.

Cette cavité supérieure 112 est délimitée latéralement par une première face 117 qui longe l'intrados et une seconde face 118 espacée de la première, ces faces étant réunies à l'avant et à l'arrière. Elle est délimitée verticalement par un fond 119 parallèle à la paroi de fermeture, et par la face inférieure 121 de cette paroi de fermeture. Le conduit central 113 alimente cette cavité supérieure 112 en s'étendant depuis le pied de l'aube par lequel il est alimenté en air, jusqu'au sommet S, où il débouche entièrement dans le fond 119.

Le bord d'attaque de l'aube 111 est refroidi par une rampe amont 122 qui s'étend depuis la base de la pale jusqu'au sommet S, alimenté par un conduit amont 123 de manière calibrée grâce à des passages calibrés 124 régulièrement espacés le long de la direction d'envergure EV de l'aube et qui relient chacun le conduit amont 123 à la rampe amont 122.

La paroi de l'aube comporte dans la région du bord d'attaque des trous traversants grâce auxquels l'air de la rampe refroidit la face externe du bord d'attaque. La première cavité latérale 114 a une faible épaisseur et s'étend depuis le pied jusqu'à la région du sommet S en ayant un contour généralement rectangulaire. Elle se termine sous la cavité supérieure 112 sans la couvrir, et elle présente une largeur suffisante pour masquer ou couvrir le conduit central 113 ainsi que le conduit amont 123 qui longe ce conduit central 113, et le conduit aval d'alimentation calibrée de la rampe aval.

La deuxième cavité latérale 116 a aussi une faible épaisseur, et elle s'étend depuis le pied jusqu'à la région du sommet S mais en recouvrant la cavité supérieure 112. Elle présente un contour généralement rectangulaire, de largeur suffisante pour masquer ou couvrir le conduit central 113, le conduit amont 123 et la cavité supérieure 112 du côté de l'extrados, ainsi que le conduit aval d'alimentation calibrée de la rampe aval.

La fente de refroidissement 115 du bord de fuite située dans la région du sommet S est approvisionnée en air par la cavité supérieure 112. Les autres fentes du bord de fuite, repérées par 126, sont quant à elles alimentées par la rampe aval 127 qui s'étend depuis le pied, jusqu'à la région du sommet S.

Cette rampe aval 127 est ici alimentée de manière calibrée par le conduit aval 128 qui s'étend depuis le pied de l'aube jusqu'à la région de son sommet pour se terminer au niveau du sommet S en contournant la cavité supérieure 112. Ce conduit aval 128 est situé entre le conduit central 113 et la rampe aval 127. Le conduit aval 128 alimente de manière calibrée la rampe aval 127, au moyen d'une série de passages calibrés 129 régulièrement espacés les uns des autres et joignant chacun le conduit aval 128 à la rampe 127.

Comme visible dans la figure 7, les cavités latérales 114 et 116 sont ici agencées pour couvrir le conduit amont 123, le conduit central 113 ainsi que le conduit aval 128 de façon à couvrir conjointement ces trois éléments pour les isoler thermiquement de la paroi d'intrados et de la paroi d'extrados.

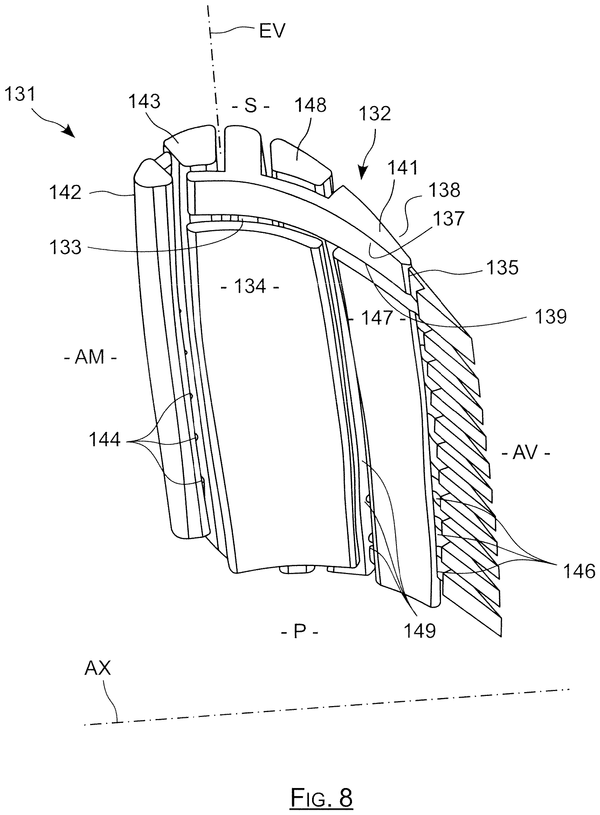

Dans un sixième mode de réalisation de l'invention, non couvert par les revendications, représenté à la figure 8, l'aube qui est repérée par 131 comporte aussi une cavité supérieure 132 alimentée par un conduit central 133, mais celui-ci est isolé par une seule cavité latérale 134 située du côté intrados. Ceci permet de simplifier la fabrication de l'aube tout en offrant une efficacité de refroidissement satisfaisante du fait qu'en pratique, la paroi d'intrados tend à s'échauffer significativement plus que la paroi d'extrados.

La cavité supérieure 132 a une forme sensiblement identique à celle des aubes des figures 3 à 7. Elle est située à proximité du sommet S, s'étend le long des parois de fermeture et d'intrados, de l'avant jusqu'à l'arrière de la pale. Toute la partie du sommet S située du côté intrados est approvisionnée en air de refroidissement par cette cavité supérieure 132, sur toute sa longueur jusqu'à l'extrémité arrière. Cette cavité supérieure 132 s'étend aussi jusqu'au bord de fuite, pour alimenter au moins la fente la plus proche du sommet S, repérée par 135, et éventuellement quelques fentes adjacentes.

Cette cavité supérieure 132 est délimitée latéralement par une première face 137 qui longe l'intrados et une seconde face 138 espacée de la première, ces faces étant réunies à l'avant et à l'arrière. Elle est délimitée verticalement par un fond 139 parallèle à la paroi de fermeture, et par la face inférieure 141 de cette paroi de fermeture. Le conduit central 133 alimente cette cavité supérieure 132 en s'étendant depuis le pied de l'aube par lequel il est alimenté en air, jusqu'au sommet S, où il débouche entièrement dans le fond 139.

Le bord d'attaque de l'aube 131 est refroidi par une rampe amont 142 qui s'étend depuis la base de la pale jusqu'au sommet S, qui est alimentée par un conduit amont 143 de manière calibrée au moyen de passages calibrés 144 qui sont régulièrement espacés le long de la direction d'envergure EV de l'aube et qui relient chacun le conduit amont 143 à la rampe amont 142. La paroi de l'aube comporte dans la région du bord d'attaque des trous traversants grâce auxquels l'air de la rampe refroidit la face externe du bord d'attaque.

La cavité latérale 134 a une faible épaisseur et s'étend depuis le pied jusqu'à la région du sommet S en ayant un contour généralement rectangulaire. Elle se termine sous la cavité supérieure 132 sans la couvrir. Elle présente une largeur suffisante pour masquer ou couvrir le conduit central 133 ainsi que le conduit amont 143 qui longe ce conduit central 133.

La fente de refroidissement 135 du bord de fuite située dans la région du sommet S est approvisionnée en air par la cavité supérieure 132. Les autres fentes du bord de fuite, repérées par 146, sont quant à elles alimentées par une rampe aval 147 qui s'étend depuis le pied, jusqu'à la région du sommet S.

Cette rampe aval 147 est ici alimentée de manière calibrée par un conduit aval 148 qui s'étend depuis le pied de l'aube jusqu'à la région de son sommet pour se terminer au niveau du sommet S en contournant la cavité supérieure 132. Ce conduit aval 148 est situé entre le conduit central 133 et la rampe aval 147. Le conduit aval 148 alimente de manière calibrée la rampe aval 147, au moyen d'une série de passages calibrés 149 régulièrement espacés les uns des autres le long de la direction d'envergure EV et joignant chacun ce conduit aval 148 à la rampe 147.

Comme visible dans la figure 8, la cavité latérale 134 couvre le conduit amont 143 ainsi que le conduit central 133 et que le conduit aval 148 de façon à isoler thermiquement ces trois éléments de la paroi d'intrados pour réduire l'échauffement de l'air qu'ils véhiculent.

Comme on l'aura compris, d'une manière générale, dans chacun des modes de réalisation de l'invention, la région du sommet est alimentée en air par la cavité supérieure en ce qui concerne toute la partie du sommet s'étendant le long de l'intrados. Les autres parties du sommet sont alimentées en air par les autres conduits, rampes ou cavités de l'aube, comme en particulier la rampe amont et éventuellement le conduit amont, la rampe aval et éventuellement le conduit aval, et le cas échéant la seconde cavité latérale longeant l'extrados.

Dans les exemples qui ont été décrits, la cavité supérieure a une épaisseur inférieure à l'épaisseur de la pale, c'est-à-dire à la distance séparant l'intrados de l'extrados. En pratique, l'épaisseur de cette cavité peut être réduite à moins de la moitié de l'épaisseur de la pale.

Dans les différents modes de réalisation, la cavité supérieure permet d'améliorer significativement le refroidissement de la région du sommet de l'aube, notamment en fournissant de l'air très frais à la fente du bord de fuite qui est la plus proche du sommet. Cette cavité supérieure assure également un refroidissement par conduction thermique des parois de l'aube qui la délimitent, comme par exemple la paroi de fermeture de l'aube.

Par ailleurs, des trous traversant les parois de l'aube et débouchant dans les cavités latérales internes formant écran thermique peuvent être prévus pour établir une circulation d'air optimale dans ces cavités. Chacun de ces trous est avantageusement situé au niveau d'une zone de dépression pour favoriser la circulation d'air. Chacun de ces trous assure que l'air collecté en pied d'aube et qui est acheminé dans une cavité formant écran thermique, est aspiré hors de l'aube, après avoir cheminé dans cette cavité.

Dans les différents modes de réalisation, le refroidissement de l'aube est encore optimisé en minimisant les pertes de charges dans chaque conduit interne pour y réduire les échanges thermiques, et en prévoyant au contraire des promoteurs de turbulences dans chaque cavité latérale pour y accroître les échanges thermiques.

Les cavités latérales ont ainsi une efficacité accrue en tant qu'écran thermique du fait qu'elles absorbent la chaleur issue des parois externes qu'elles longent, et l'air circulant dans les conduits internes est soumis à peu de pertes de charges afin de circuler rapidement pour se réchauffer le moins possible.

Les conduits internes tels que le conduit amont, le conduit central et le conduit aval ont ainsi des parois internes lisses pour favoriser une circulation rapide de l'air de refroidissement en minimisant les échanges thermiques entre cet air et les parois du conduit dans lequel il chemine. Chaque cavité latérale est avantageusement pourvue de déflecteurs qui favorisent une circulation de l'air dans toutes les régions de la cavité. De plus, les faces internes de la cavité sont pourvues de perturbateurs et/ou de pontets pour créer des turbulences dans la circulation de l'air afin de favoriser un haut niveau d'échange thermique entre l'air est les parois qu'il longe.

D'une manière générale, l'aube décrite peut être réalisée par fabrication directe, par fabrication additive, ou par fonderie.

## Revendications

1. Aube (51 ; 71 ; 91 ; 111 ; 131) de turbine de turbomachine telle qu'un turbopropulseur ou un turboréacteur, cette aube étant une pièce monobloc creuse fabriquée par moulage, cette aube comprenant un pied (P), une pale portée par ce pied et s'étendant selon une direction d'envergure (EV) en se terminant par un sommet (S), cette pale comprenant un bord d'attaque et un bord de fuite situé en aval du bord d'attaque, cette pale comprenant une paroi d'intrados et une paroi d'extrados espacées latéralement l'une de l'autre et reliant chacune le bord d'attaque au bord de fuite, cette pale comprenant :
- une pluralité de conduits (53, 63 73, 83 ; 93, 103, 108 ; 113, 123, 128 ; 133, 143, 148) configurés pour collecter de l'air de refroidissement au niveau du pied de l'aube et pour le faire circuler dans la pale pour la refroidir ;
- des trous (22, 24, 26, 27) et/ou des fentes (55, 67 ; 75, 86 ; 95, 106 ; 115, 126 ; 135, 146) réalisés dans ses parois pour évacuer hors de cette pale l'air de refroidissement ;
- une cavité interne supérieure (52 ; 72 ; 92 ; 112 ; 132) située au niveau du sommet de la pale pour refroidir ce sommet de pale (S) ;
au moins un de la pluralité de conduits (53 ; 73 ; 93 ; 113 ; 133) est un conduit central alimentant directement la cavité supérieure (52 ; 72 ; 92 ; 112 ; 132) avec de l'air de refroidissement collecté dans le pied (P) en étant exclusivement dédié à la fourniture d'air de refroidissement à cette cavité supérieure (52 ; 72 ; 92 ; 112 ; 132) ;
**caractérisée en ce que** :
- elle comprend une première cavité latérale interne (54 ; 74 ; 94 ; 114 ; 134) qui longe la paroi d'intrados tout en étant séparée du conduit d'alimentation directe (53 ; 73 ; 93 ; 113 ; 133), pour former un écran thermique qui isole thermiquement ce conduit d'alimentation directe (53 ; 73 ; 93 ; 113 ; 133) de la paroi d'intrados ;
- elle comprend une seconde cavité latérale interne (56 ; 76 ; 96 ; 116) longeant la paroi d'extrados tout en étant séparée du conduit d'alimentation directe (53 ; 73 ; 93 ; 113), pour former un écran thermique qui isole thermiquement ce conduit d'alimentation directe (53 ; 73 ; 93 ; 113) de la paroi d'extrados ;
- la cavité supérieure (52 ; 72 ; 92 ; 112 ; 132) s'étend de l'amont à l'aval de la pale, pour alimenter au moins une fente (55 ; 75 ; 95 ; 115 ; 135) de refroidissement du bord de fuite de la pale ;
et **en ce qu'**elle comprend :
- une rampe amont (62 ; 82 ; 102 ; 122) d'alimentation de trous (22) de refroidissement du bord d'attaque, et un conduit amont (63 ; 83 ; 103 ; 123) d'alimentation calibrée de cette rampe amont (62 ; 82 ; 102 ; 122) qui est isolé thermiquement par chaque cavité latérale interne (54, 56 ; 74, 76 ; 94, 96 ; 114, 116) ; et/ou
- une rampe aval (127) d'alimentation de fentes de refroidissement (126) du bord de fuite situées dans la paroi d'intrados, et un conduit aval (128) d'alimentation calibrée de cette rampe aval (127) qui est isolé thermiquement par chaque cavité latérale interne (114, 116).

2. Aube (51 ; 71 ; 91 ; 111 ; 131) selon la revendication 1, dans laquelle la paroi d'intrados comporte au moins un trou traversant (27) ou une fente traversante (55 ; 75 ; 95 ; 115 ; 135) qui débouche dans la cavité supérieure (52 ; 72 ; 92 ; 112 ; 132).

3. Aube (51 ; 71 ; 91 ; 111) selon la revendication 1 ou 2, dans laquelle chaque cavité latérale interne (54, 56 ; 74, 76 ; 94, 96 ; 114, 116) est pourvue de promoteurs de turbulences et/ou de déflecteurs pour y accroître les échanges thermiques, et dans laquelle chaque conduit d'alimentation directe (53 ; 73 ; 93 ; 113) présente des parois lisses pour limiter les pertes de charge.

4. Aube (71) selon la revendication 1 , dans laquelle les deux cavités latérales internes (74, 76) sont réunies par une zone de jonction située en aval du conduit d'alimentation directe (73) pour constituer une cavité unique enveloppant les trois quarts de la circonférence de ce conduit d'alimentation directe (73) en s'étendant sur la majorité de la longueur de ce conduit d'alimentation directe (73).

5. Moyens de moulage configurés pour fabriquer une aube, comprenant des empreintes et un ensemble de noyaux adaptés à la formation des conduits internes (53, 63 ; 73, 83 ; 93, 103, 108 ; 113, 123, 128 ; 133, 143, 148) des cavités latérales internes (54, 56 ; 74, 76 ; 94, 96 ; 114, 116 ; 134), des rampes (62 ; 82 ; 102 ; 122, 127) et des fentes (55, 67 ; 75, 86 ; 95, 106 ; 115, 126 ; 135, 146) d'une aube selon l'une des revendications 1 à 4.

6. Turbine de turbomachine comprenant une aube selon l'une quelconque des revendications 1 à 4.

7. Turbomachine comprenant une turbine selon la revendication précédente.

## Patentansprüche

1. Turbinenschaufel (51; 71; 91; 111; 131) einer Turbomaschine wie einer Propellerturbine oder eines Turbostrahltriebwerks, wobei die Schaufel ein hohles einteiligen Bauteil ist, das durch Formen hergestellt wird, wobei die Schaufel einen Fuß (P) und ein Blatt umfasst, das von dem Fuß getragen wird und sich in Spannweitenrichtung (EV) erstreckt und an einer Spitze (S) endet, wobei das Blatt eine Vorderkante und eine Hinterkante, die sich stromabwärts der Vorderkante befindet, umfasst, wobei das Blatt eine druckseitige Wand und eine saugseitige Wand umfasst, die seitlich voneinander beabstandet sind und jeweils die Vorderkante mit der Hinterkante verbinden, wobei das Blatt Folgendes umfasst:
- eine Vielzahl von Kanälen (53, 63; 73, 83; 93, 103, 108; 113, 123, 128; 133, 143, 148), die dazu konfiguriert sind, Kühlluft am Fuß der Schaufel zu sammeln und diese in dem Blatt zirkulieren zu lassen, um es zu kühlen;
- Löcher (22, 24, 26, 27) und/oder Schlitze (55, 67; 75, 86; 95, 106; 115, 126; 135, 146), die in ihren Wänden ausgebildet sind, um die Kühlluft aus dem Blatt abzuführen;
- einen oberen inneren Hohlraum (52; 72; 92; 112; 132), der sich an der Spitze des Blatts befindet, um die Blattspitze (S) zu kühlen;
wobei mindestens einer der Vielzahl von Kanälen (53; 73; 93; 113; 133) ein zentraler Kanal ist, der den oberen Hohlraum (52; 72; 92; 112; 132) direkt mit Kühlluft versorgt, die im Fuß (P) gesammelt wird, und dabei ausschließlich für das Bereitstellen von Kühlluft an den oberen Hohlraum (52; 72; 92; 112; 132) vorgesehen ist;
**dadurch gekennzeichnet, dass**:
- sie einen ersten inneren seitlichen Hohlraum (54; 74; 94; 114; 134) umfasst, der entlang der druckseitigen Wand verläuft und dabei vom Direktversorgungskanal (53; 73; 93; 113; 133) getrennt ist, um einen Hitzeschild zu bilden, der den Direktversorgungskanal (53; 73; 93; 113; 133) von der druckseitigen Wand thermisch isoliert;
- sie einen zweiten inneren seitlichen Hohlraum (56; 76; 96; 116) umfasst, der entlang der saugseitigen Wand verläuft und dabei vom Direktversorgungskanal (53; 73; 93; 113) getrennt ist, um einen Hitzeschild zu bilden, der den Direktversorgungskanal (53; 73; 93; 113) von der saugseitigen Wand thermisch isoliert;
- der obere Hohlraum (52; 72; 92; 112; 132) sich von der stromaufwärtigen zur stromabwärtigen Seite des Blatts erstreckt, um mindestens einen Kühlschlitz (55; 75; 95; 115; 135) der Hinterkante des Blatts zu versorgen;
und dadurch, dass sie Folgendes umfasst:
- eine stromaufwärts gelegene Versorgungsrampe (62; 82; 102; 122) für die Kühllöcher (22) der Vorderkante und einen stromaufwärts gelegenen kalibrierten Versorgungskanal (63; 83; 103; 123) für die stromaufwärts gelegene Rampe (62; 82; 102; 122), der durch jeden inneren seitlichen Hohlraum (54, 56; 74, 76; 94, 96; 114, 116) thermisch isoliert ist; und/oder
- eine stromabwärts gelegene Versorgungsrampe (127) für die Kühlschlitze (126) der Hinterkante, die sich in der druckseitigen Wand befinden, und einen stromabwärts gelegenen kalibrierten Versorgungskanal (128) für die stromabwärts gelegene Rampe (127), der durch jeden inneren seitlichen Hohlraum (114, 116) thermisch isoliert ist.

2. Schaufel (51; 71; 91; 111; 131) nach Anspruch 1, wobei die druckseitige Wand mindestens ein Durchgangsloch (27) oder einen Durchgangsschlitz (55; 75; 95; 115; 135) umfasst, das bzw. der in den oberen Hohlraum (52; 72, 92; 112; 132) mündet.

3. Schaufel (51; 71; 91; 111) nach Anspruch 1 oder 2, wobei jeder innere seitliche Hohlraum (54, 56; 74, 76; 94, 96; 114, 116) mit Turbulenzpromotern und/oder Deflektoren versehen ist, um den Wärmeaustausch darin zu erhöhen, und wobei jeder Direktversorgungskanal (53; 73; 93; 113) glatte Wände aufweist, um den Druckverlust zu begrenzen.

4. Schaufel (71) nach Anspruch 1, wobei die beiden inneren seitlichen Hohlräume (74, 76) durch eine Verbindungszone zusammengeführt sind, die sich stromabwärts des Direktversorgungskanals (73) befindet, um einen einzigen Hohlraum zu bilden, der drei Viertel des Umfangs des Direktversorgungskanals (73) umgibt und sich dabei über den größten Teil der Länge des Direktversorgungskanals (73) erstreckt.

5. Formmittel, die dazu konfiguriert sind, eine Schaufel herzustellen, und Formhohlräume und einen Satz von Kernen umfassen, die für das Bilden der inneren Kanäle (53, 63; 73, 83; 93, 103, 108; 113, 123, 128; 133, 143, 148) der inneren seitlichen Hohlräume (54, 56; 74, 76; 94, 96; 114, 116; 134), der Rampen (62; 82; 102; 122, 127) und der Schlitze (55, 67; 75, 86; 95, 106; 115, 126; 135, 146) einer Schaufel nach einem der Ansprüche 1 bis 4 ausgelegt sind.

6. Turbine einer Turbomaschine, die eine Schaufel nach einem der Ansprüche 1 bis 4 umfasst.

7. Turbomaschine, die eine Turbine nach dem vorhergehenden Anspruch umfasst.

## Claims

1. Turbine blade (51, 71, 91, 111, 131) for a turbine of a turbomachine such as a turboprop engine or a turbojet engine, this turbine blade being a hollow one-piece part manufactured by molding, this turbine blade comprising a root (P), a blade supported by this root and extending in a span direction (EV) terminating in a tip (S), this blade comprising a leading edge and a trailing edge located downstream of the leading edge, said blade comprising an intrados wall and an extrados wall which are spaced apart laterally from one another and each connect the leading edge to the trailing edge, said blade comprising:
- a plurality of ducts (53, 63, 73, 83, 93, 103, 108, 113, 123, 128, 133, 143, 148) configured to collect cooling air at the root of the turbine blade and to circulate it through the blade to cool it;
- holes (22, 24, 26, 27) and/or slots (55, 67, 75, 86, 95, 106, 115, 126, 135, 146) formed in its walls for discharging the cooling air from the blade;
- an upper internal cavity (52, 72, 92, 112, 132) located at the tip of the blade for cooling this blade tip (S);
at least one of the plurality of ducts (53, 73, 93, 113, 133) is a central duct directly supplying the upper cavity (52, 72, 92, 112, 132) with cooling air collected at the root (P) by being exclusively dedicated to the supply of cooling air to this upper cavity (52, 72, 92, 112, 132),
**characterized in that**
- it comprises a first internal lateral cavity (54, 74, 94, 114, 134) extending along the intrados wall while being separate from the direct feed duct (53, 73, 93, 113, 133) for forming a heat shield which thermally insulates this direct feed duct (53, 73, 93, 113, 133) from the intrados wall,
- it comprises a second internal lateral cavity (56, 76, 96, 116) extending along the extrados wall while being separate from the direct feed duct (53, 73, 93, 113) to form a thermal shield which thermally insulates this direct feed duct (53, 73, 93, 113) from the extrados wall,
- the upper cavity (52, 72, 92, 112, 132) extends from upstream to downstream of the blade, for supplying at least one slot (55, 75, 95, 115, 135) for cooling the trailing edge of the blade,
and **in that** it comprises:
- an upstream ramp (62, 82, 102, 122) for supplying cooling holes (22) of the leading edge, and an upstream duct (63, 83, 103, 123) for calibrated supply to this upstream ramp (62, 82, 102, 122) which is thermally insulated by each internal lateral cavity (54, 56, 74, 76, 94, 96, 114, 116); and/or
- a downstream ramp (127) for supplying cooling slots (126) of the trailing edge located in the intrados wall, and a calibrated downstream supply duct (128) for this downstream ramp (127) which is thermally insulated by each internal lateral cavity (114, 116).

2. Turbine blade (51, 71, 91, 111, 131) according to claim 1, wherein the intrados wall includes at least one through hole (27) or through slot (55, 75, 95, 115, 135) which opens into the upper cavity (52, 72, 92, 112, 132).

3. Turbine blade (51, 71, 91, 111) according to claim 1 or 2, wherein each internal lateral cavity (54, 56, 74, 76, 94, 96, 114, 116) is provided with turbulence promoters and/or deflectors to increase heat exchange therein, and wherein each direct feed duct (53, 73, 93, 113) has smooth walls for limiting pressure losses.

4. Turbine blade (71) according to claim 1, wherein the two internal lateral cavities (74, 76) are joined by a junction zone located downstream of the direct supply duct (73) to form a single cavity enveloping three quarters of the circumference of this direct supply duct (73) and extending over the majority of the length of this direct supply duct (73).

5. Molding means configured for the manufacture of a turbine blade, comprising impressions and a set of cores intended for the formation of internal ducts (53, 63, 73, 83, 93, 103, 108, 113, 123, 128, 133, 143, 148) of internal lateral cavities (54, 56, 74, 76, 94, 96, 114, 116, 134), ramps (62, 82, 102, 122, 127) and slots (55, 67, 75, 86, 95, 106, 115, 126, 135, 146) of a turbine blade according to any one of claims 1 to 4.

6. Turbine of a turbomachine comprising a turbine blade according to any one of claims 1 to 4.

7. Turbomachine comprising a turbine according to the preceding claim.
